# EUROPEAN PATENT APPLICATION

(11) **EP 0 798 067 A1**
(43) Date of publication of application: **01.10.1997**
(21) Application number: 95937203.8
(22) Date of filing: 28.11.1995
(51) Int. Cl.: B23K 26/00, B23K 26/06

(54) **LASER MARKING APPARATUS**

(30) Priority: 28.11.1994 JP 293337/94
(71) Applicant: KOMATSU LTD., Minato-ku, Tokyo 107 (JP)
(72) Inventor: SAITO, Yoshinori, Hiratsuka-shi Kanagawa 254 (JP); KATO, Misao, Hiratsuka-shi Kanagawa 254 (JP); SUWA, Masato, Hiratsuka-shi Kanagawa 254 (JP); ICHIHARA, Masashi, Hiratsuka-shi Kanagawa 254 (JP); AOKI, Sadaharu, Hiratsuka-shi Kanagawa 254 (JP)
(74) Representative: KUHNEN, WACKER & PARTNER
(86) International application number: JP9502422
(87) International publication number: WO9616767

(57) **Abstract**

A laser marking device, comprising a laser beam ramifying unit that ramifies a laser beam generated by a single laser oscillator along multiple different optical paths in a time-sharing manner, and multiple marking units that utilize the various laser beams ramified by this laser beam ramifying unit to scan liquid crystal masks on which required masking patterns are displayed, and which use the laser beams that pass through the liquid crystal masks to mark work, the laser beam ramifying unit of which comprises a condensation means that condenses the laser beam generated by the laser oscillator, a laser beam ramifying means that ramifies the laser beam condensed by the condensation means along multiple different optical paths in a time-sharing manner, and multiple light-guiding means that guide the various laser beams ramified by the laser beam ramifying means into the multiple marking units so as to enable the spacing between the optical fibers to be reduced, the switching of ramified laser beam destinations to be done at high speed, and the density of the spatial arrangement of the fiber bundles to be improved.

## Description

### TECHNICAL FIELD

The present invention relates to a laser marking device used in the semiconductor manufacturing field to mark product numbers, manufacturing dates, lot numbers, serial numbers, etc. on products, and more particularly to a technology that enables a single laser oscillator to drive multiple marking units in parallel by ramifying the laser beam generated by the single laser oscillator and supplying these ramified laser beams to multiple marking units.

### BACKGROUND ART

A laser marking device displays a required marking pattern on a liquid crystal mask as well as marks this marking pattern on a work by irradiating a laser beam through the liquid crystal mask onto the work.

Such laser marking devices are made up of a single laser oscillator and a single marking unit combined to form a laser marking device. Operational issues include the problem of not being able to make efficient use of laser oscillator output when standby time resulting from inspections and the like is longer than the time required for marking.

Also, with the foregoing laser marking device, when it comes to simultaneously marking different images, multiple laser marking devices must be set up and run in parallel, which causes problems from the standpoints of installation space and costs.

Out of this arose the idea for a system that ramifies the laser beam from a single laser oscillator and supplies these ramified laser beams to multiple marking units via multiple optical fibers.

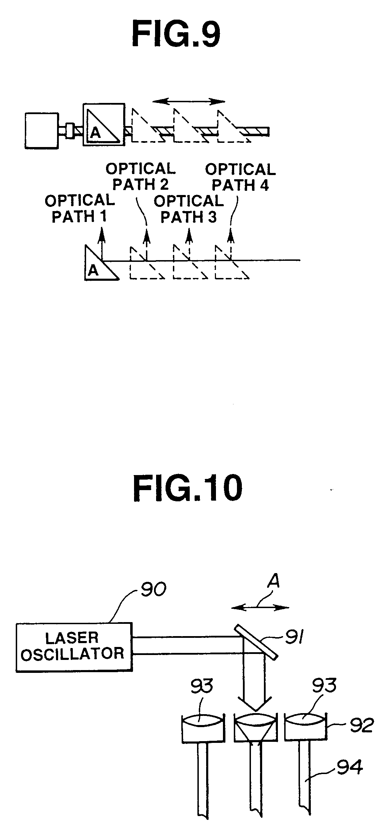

With such a system, the configuration for ramifying the laser beam is vitally important. Configurations such as that shown in Figure 10 have been employed in the past.

That is, in Figure 10, the laser beam from the laser oscillator 90 is transmitted in the direction indicated by arrow A via a sliding deflection mirror 91 to three optical fiber incoming radiation lens units 92 lined up side by side. The optical fiber incoming radiation lens units 92 are equipped with condensing lenses 93 and are connected to optical fibers 94. Therefore, this conventional technology enables a laser beam to be ramified along three optical paths by sliding the deflection mirror 91.

However, the problem with the foregoing conventional laser beam ramifying unit is that the side-by-side arrangement of the condensing lens-equipped incoming radiation lens units 92 increases a pitch between the optical fibers, delays the switching of the ramified laser beam destination and makes it impossible to improve the density of the spatial arrangement of the fiber bundles.

With the foregoing in view, it is an object of the present invention to provide a laser marking device equipped with a laser ramifying unit capable of reducing the pitch between the optical fibers, increasing the speed of switching the ramified laser beam destination, and improving the density of the spatial arrangement of the fiber bundles.

### DISCLOSURE OF THE INVENTION

The present invention provides a laser marking device comprising: a laser oscillator; a laser beam ramifying unit for ramifying a laser beam generated by the laser oscillator along multiple different optical paths in a time-sharing manner; and multiple marking units, by utilizing various laser beams ramified by the laser beam ramifying unit, for scanning liquid crystal masks on which required marking patterns are displayed, and for marking a work by the laser beams that pass through the liquid crystal masks, characterized in that the laser beam ramifying unit comprises: condensation means for condensing the laser beam generated by the laser oscillator; laser beam ramifying means for ramifying the laser beam condensed by the condensation means along the multiple optical paths in the time-sharing manner; and multiple light-guiding means for guiding the various laser beams ramified by the laser beam ramifying means into the multiple marking units.

This invention uses a laser beam ramifying unit to ramify the laser beam generated by a laser oscillator after that laser beam has been condensed by a condensing lens. It then transmits the ramified laser beams to multiple marking units via optical fibers.

### BRIEF DESCRIPTION OF THE DRAWINGS

Figure 1 shows an embodiment of this invention;
Figure 2 provides an example of a fiber disconnect detection sensor;
Figure 3 shows the internal configuration of a marking device;
Figure 4 provides an example of a light reception verification sensor;
Figure 5 shows the configuration of the control system in the laser marking device;
Figure 6 shows various methods of switching the ramified laser beam destination;
Figure 7 provides an example of another configuration for a laser beam ramifying unit;
Figure 8 shows how a laser beam is ramified using the laser beam ramifying unit indicated in Figure 7;
Figure 9 provides an example of a conventional laser beam ramifying unit; and
Figure 10 shows prior art related to laser beam ramification.

### BEST MODE FOR CARRYING OUT THE INVENTION

The following is a detailed explanation of this invention in accordance with the embodiments shown in the attached drawings.

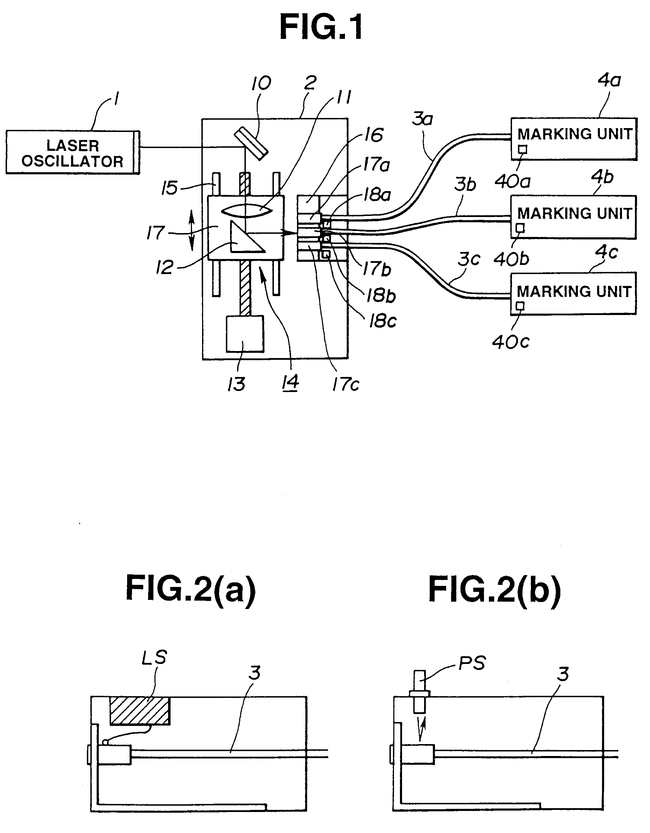

Figure 1 shows an embodiment of this invention. A laser beam generated by a laser oscillator l is ramified in a time-sharing manner into three laser beams by a laser beam ramifying unit 2, after which these ramified laser beams are transmitted via three optical fibers 3a, 3b, 3c into three marking units 4a, 4b, 4c.

The laser beam ramifying unit 2 comprises an alignment mirror 10, a condensing lens 11, a deflection mirror (or prism) 12, a servo motor 13, a ball screw or other sliding mechanism 14, guide rails 15 and an optical fiber connection unit 16.

The condensing lens 11 and deflection mirror 12 are affixed to a movable body 17 of the slide mechanism 14, and the condensing lens 11 and deflection mirror 12 slide in unison.

That is, in this laser beam ramifying unit 2, the rotation of the servo motor 13 drives the slide mechanism 14, causing the movable body 17 to slide, which changes the position of the condensing lens 11 and deflection mirror 12 so that the destination of the ramified laser beam is selected from among the three optical fibers 3a, 3b, 3c.

The optical fiber connection unit 16 comprises connectors 17a-17c for connecting the optical fibers 3a, 3b, 3c, each of these connectors being equipped with a fiber disconnect detection sensor 18a-18c that detects when an optical fiber comes off. The fiber disconnect detection sensors 18a-18c can be limit switches LS (the detection output of which turns ON when a fiber comes off) as shown in Figure 2 (a), or they can be reflection-type photoelectric sensors PS (receive reflected light when an optical fiber is connected, but do not receive reflected light when an optical fiber comes off) as shown in Figure 2 (b).

In this laser beam ramifying unit 2, the laser beam generated by the laser oscillator 1 is deflected by the alignment mirror 10, after which it is condensed by the condensing lens 11 before being transmitted to the deflection mirror 12. The laser beam is then deflected by the deflection mirror 12 and transferred into the optical fibers 3a-3c.

Since the laser beam ramifying unit 2 transmits to the incoming radiation ends of the optical fibers laser beams thus condensed by the condensing lens 11, compared to the conventional configuration wherein a condensing lens is located at the incoming radiation end of an optical fiber, the slide mechanism travels a shorter distance to change the destination of the ramified laser beam, and the pitch between the optical fibers can be reduced. This enables high speed switching of ramified laser beam destinations, and makes it possible to improve the density of the spatial arrangement of the fiber bundles.

Furthermore, when the movement of the slide mechanism 14 changes the destination of a ramified laser beam, and the laser beam is not positioned on the surface of the incoming radiation end of an optical fiber, a Q switch of the laser oscillator 1 is used to lower the intensity of the generated laser beam, and the output of the laser beam is stopped by closing the mechanical shutter built in the laser oscillator, thereby preventing the damage or destruction of the optical fiber connection unit 16.

In the configuration shown in Figure 1 described above, the condensing lens 11 and deflection mirror 12 slide in unison, but a configuration wherein the condensing lens 11 is immobilized, and only the deflection mirror 12 slides can also be used.

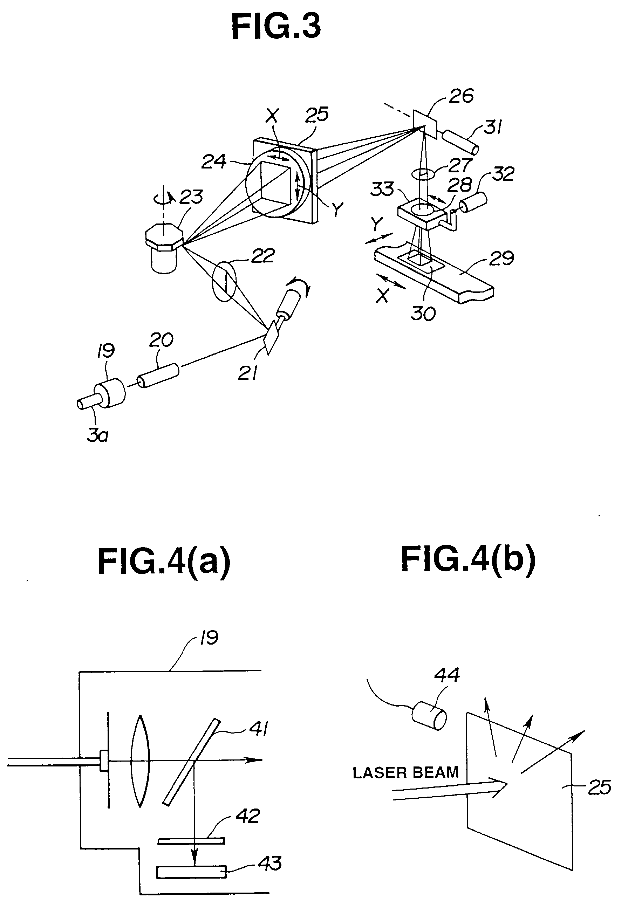

Figure 3 shows the internal configuration of marking unit 4a. The other marking units 4b, 4c are configured in the same way.

A laser beam guided by an optical fiber 3a is transferred via a laser outgoing radiation unit 19 into a beam expander 20. The laser beam condensed by the beam expander 20 is transferred onto a liquid crystal mask 25 via a galvano-scanner mirror 21 and lens 22 serving as a Y-direction deflection system, and a polygonal mirror 23 and lens 24 serving as an X-direction deflection system. That is, in this case, the laser beam is raster scanned onto the liquid crystal mask 25 via a polygonal mirror 23 primary scan (X direction) and a scanner mirror 21 secondary scan (Y direction).

The laser beam passed through the liquid crystal mask 25 is irradiated onto a work 30 on a conveyance unit 29 via a mirror 26 and lens 27 serving as a Y-direction deflection system and a lens 28 with a mobile table serving as an X-direction deflection system, thereby marking the marking pattern displayed on the liquid crystal mask 25 onto the work 30. The Y-direction deflection system mirror 26 is rotated by a motor 31, deflecting the laser beam in the Y direction, and the X-direction deflection system lens 28 deflects the laser beam in the X direction via the movement of a mobile table 33 driven by a motor 32. These mirror 26 and lens 28 position the laser beam in relation to the work 30.

Each marking unit 4a-4c is equipped with a light-receiving verification sensor 40a-40c which verifies for certain that a laser beam is reaching each marking unit. Each of these sensors 40a-40c detects the disconnection and/or breaking of optical fibers.

An example of these light-receiving verification sensors 40a-40c is shown in Figure 4 (a), (b).

In Figure 4 (a), the inside of the laser outgoing radiation unit 19 (See Figure 3) is equipped with a partial mirror 41 that allows around 99% of light to pass through, a scattering plate 42 and a light sensor 43, arranged so that a portion of the laser beam extracted by the partial mirror 41 is detected by the light sensor 43. That is, when the light sensor 43 detects light in excess of a specified amount, operation is judged to be normal, but when it does not, it is determined that an optical fiber has either come off or been broken.

In Figure 4 (b), a light sensor 44 is installed in the vicinity of the liquid crystal mask 25 so that it can detect the light scattered by the liquid crystal mask. That is, when the light sensor 44 detects light in excess of a specified amount, operation is judged to be normal, but when it does not, it is determined that some sort of an accident has occurred.

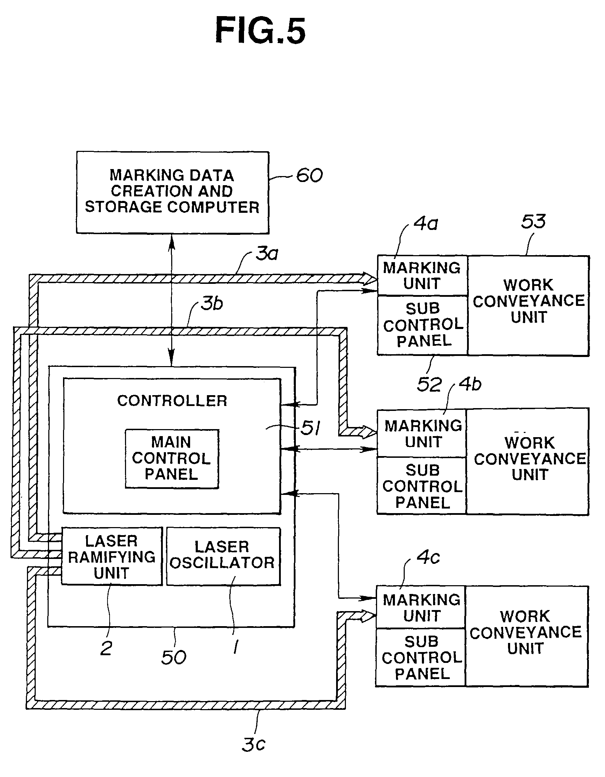

Figure 5 shows the configuration of the control system used in the above-described laser marking system. The main unit 50 comprises a laser oscillator 1, a laser beam ramifying unit 2 and a controller 51, and the laser beam ramified by the laser beam ramifying unit 2 is guided via various optical fibers 3a-3c into each marking unit 4a-4c.

Each marking unit 4a-4c is installed together with a work conveyance unit 53 that conveys work, and a secondary control panel 52.

A marking data creation and storage computer 60 stores the marking data for each marking unit 4a-4c, and transmits this marking data to the controller 51 as needed.

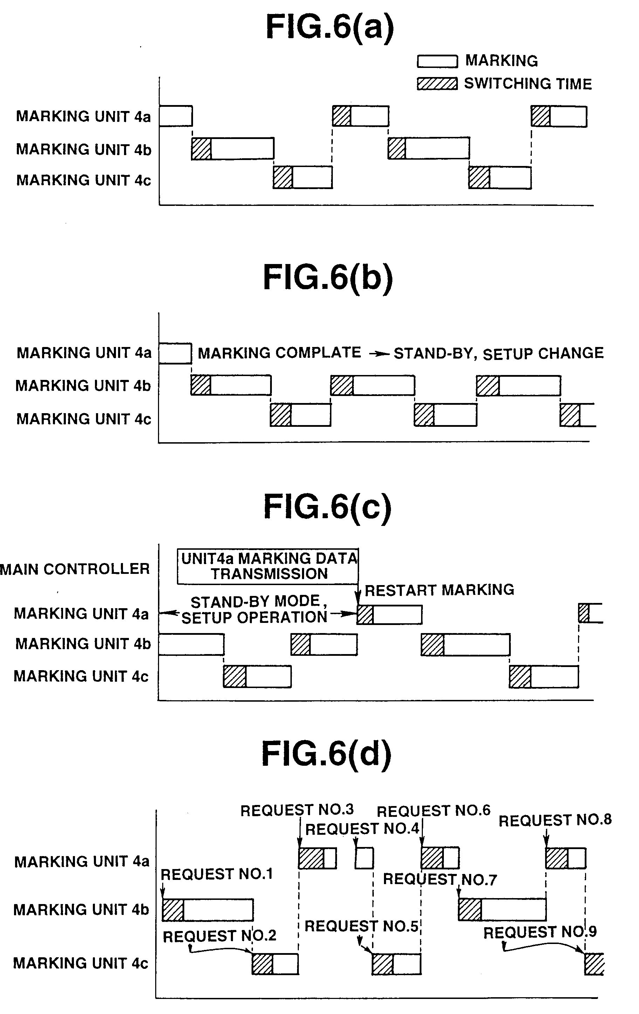

The main unit 50 controller 51 drives the laser beam ramifying unit 2 slide mechanism 14, and switches the destinations of the ramified laser beams, plus controls the transmission of the marking data to the respective marking units 4a-4c, as well as the operation of each marking unit 4a-4c. The following is an explanation based on Figure 6 of how the controller 51 controls the switching of the ramified laser beam destination.

In the switchover control shown in Figure 6 (a), a predetermined priority sequence is assigned to the marking units 4a-4c, and switching of the ramified laser beam destination is performed in accordance with this priority sequence (in this case, the sequence is 4a → 4b → 4c).

In the switchover control shown in Figure 6 (b), because marking unit 4a is in the post-marking stand-by mode, the switching of the ramified laser beam destination is performed in the order 4b → 4c → 4b → 4c.

In the switchover control shown in Figure 6 (c), the controller 51 is endowed with multitasking functions, and marking operations are carried out in parallel with the transmission of marking data to the main unit 50 from the marking data creation and storage computer 60, and the transmission of marking data to each of the marking units from the main unit 50. This approach allows marking data to be transmitted to a marking unit at an appropriate arbitrary time, such as when the marking unit is in the stand-by mode.

In the switchover control shown in Figure 6 (d), the switching of the ramified laser beam destination is based on marking request signals generated by the work conveyance units 53 for the respective marking units 4a-4c (generated when marking preparations relative to a work have been completed on the conveyance unit side, and is performed in accordance with the sequence in which the marking request signals are generated (temporal sequence).

In the control configuration shown in Figure 5, each marking unit is equipped with a separate sub-controller, and these sub-controllers can be set to independently communicate marking data and control marking operations. In this case, the operation of each marking unit 4a-4c is controlled by the respective sub-controllers.

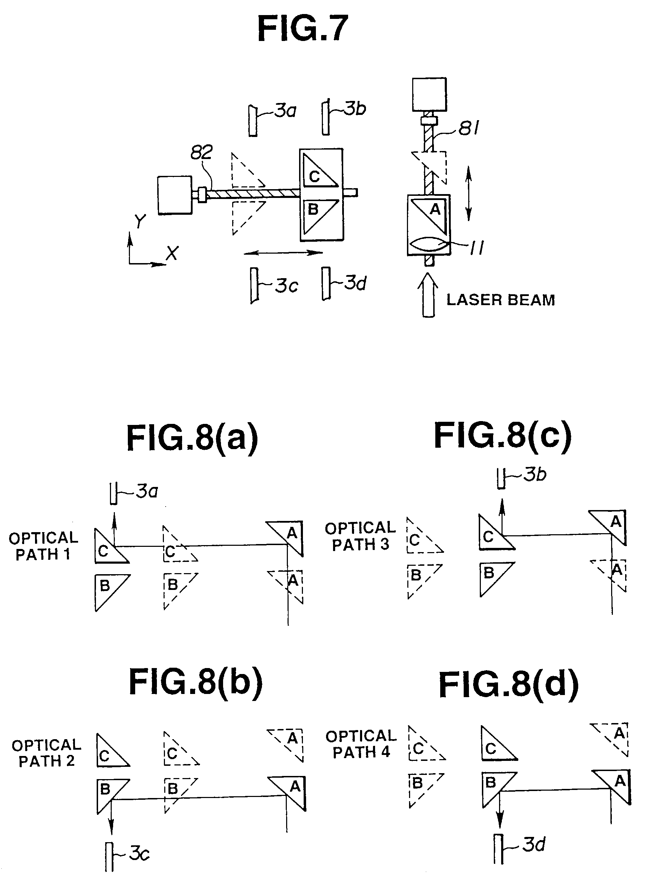

Figure 7 shows another laser beam ramification-related configuration, comprising a slide mechanism 81 which moves a deflection mirror A and a condensing lens 11 in the y direction, and a slide mechanism 82 that moves deflection mirrors B, C in the x direction, in which case, a laser beam is ramified to four optical fibers 3a-3d. The laser beam is transmitted in the y direction via the condensing lens 11 to deflection mirror A.

When guiding the laser beam to optical fiber 3a, the slide mechanisms 81, 82 operate so as to select an optical path 1 shown in Figure 8 (a); when guiding the laser beam to optical fiber 3c, the slide mechanisms 81, 82 operate so as to select an optical path 2 shown in Figure 8 (b); when guiding the laser beam to optical fiber 3b, the slide mechanisms 81, 82 operate so as to select an optical path 3 shown in Figure 8 (c); and when guiding the laser beam to optical fiber 3d, the slide mechanisms 81, 82 operate so as to select an optical path 4 shown in Figure 8 (d).

With a laser beam ramifying structure such as that shown in Figure 7, the times required for switching optical paths can all be made the same. That is, as shown in Figure 9, when the laser beam ramifying configuration involves sliding a single deflection lens in one direction, switching from optical path 1 ↔ optical path 2, optical path 2 ↔ optical path 3 and optical path 3 ↔ optical path 4 can be done quickly, but switching from optical path 1 ↔ optical path 3, optical path 2 ↔ optical path 4 and optical path 1 ↔ optical path 4 takes more time, which means that optical path switching time will differ according to the optical path selected. By comparison, the laser beam ramifying configuration presented in Figure 7 makes it possible for all these switching times to be the same, no matter which optical path is switched from or to.

Furthermore, in the laser beam ramifying configuration shown in Figure 7, the condensing lens 11 can be immobilized and only the deflection mirror A is made to slide.

Also, in all the embodiments, the deflection mirrors may be replaced with prisms.

### INDUSTRIAL APPLICABILITY

As explained above, with this invention, because the laser beam generated by the laser oscillator is condensed prior to being ramified, and this ramified laser beam is then transmitted to multiple marking units via optical fibers, the slide mechanism travels a shorter distance to change the destination of the ramified laser beam, and the pitch between the optical fibers can be reduced, thus enabling the switching of ramified laser beam destinations to be done at high speed, and the density of the spatial arrangement of the fiber bundles to be improved.

## Claims

1. A laser marking device, comprising:
a laser oscillator;
a laser beam ramifying unit for ramifying a laser beam generated by the laser oscillator along multiple different optical paths in a time-sharing manner; and
multiple marking units, by utilizing various laser beams ramified by the laser beam ramifying unit, for scanning liquid crystal masks on which required masking patterns are displayed, and for marking a work by the laser beams that pass through the liquid crystal masks, characterized in that
the laser beam ramifying unit comprises:
condensation means for condensing the laser beam generated by the laser oscillator;
laser beam ramifying means for ramifying the laser beam condensed by the condensation means along the multiple different optical paths in the time-sharing manner; and
multiple light-guiding means for guiding the various laser beams ramified by the laser beam ramifying means into the multiple marking units.

2. The laser marking device as defined in Claim 1 wherein the laser beam ramifying means comprises deflection means for deflecting the laser beam condensed by the condensation means and slide means for sliding the deflection means and condensation means in unison.

3. The laser marking device as defined in Claim 1 wherein the laser beam ramifying means comprises deflection means for deflecting the laser beam condensed by the condensation means and slide means for sliding the deflection means.

4. The laser marking device as defined in Claim 1 wherein the laser beam ramifying means comprises a first deflection unit comprising first deflection means that deflects the laser beam condensed by the condensation means, and first slide means that slides the first deflection means alone, or the condensation means and first deflection means in unison and a second deflection unit comprising second deflection means comprising multiple deflection surfaces that further deflect the laser beam deflected by the first deflection means, and second slide means that slides the second deflection means in a perpendicular direction to the direction of slide performed by the first slide means.
